# EUROPEAN PATENT APPLICATION

(11) **EP 4 535 379 A1**
(43) Date of publication of application: **09.04.2025**
(21) Application number: 23201117.1
(22) Date of filing: 02.10.2023
(51) Int. Cl.: H01F 3/14, H01F 17/06, H01F 38/02, H01F 3/10

(54) **A SATURABLE-CORE INDUCTOR**

(71) Applicant: ABB SCHWEIZ AG, 5400 Baden (CH)
(72) Inventor: Viitanen, Tero, 00380 Helsinki (FI); Leppänen, Veli-Matti, 00380 Helsinki (FI); Muszynski, Peter, 00380 Helsinki (FI)
(74) Representative: Kolster Oy Ab

(57) **Abstract**

A saturable-core inductor (20) comprises a magnetic core structure having a non-saturable part (24A, 24B) and a saturable part (22A, 22B). The non-saturable core part comprises at least one core body (24A, 24B) arranged to form a closed magnetic circuit with at least one air gap (26A, 26B). The saturable core part comprises a core bridge element (26A, 26B) inserted into each of the at least one air gap (26A, 26B) to form a magnetic bridge across the air gap for the closed magnetic circuit. Each bridge element (26A, 26B) and the core bodies (24A, 24B) are configured to be unsaturated at predetermined low current levels to provide a low-current high inductance. Each bridge element (26A, 26B) is configured to saturate fully first with increasing current levels and to quickly drop the inductance from the low-current high inductance to a low inductance, while the air gap (26A, 26B) is configured to prevent the core bodies (24A, 24B) from a full saturation.

## Description

### FIELD OF THE INVENTION

The present invention relates to inductors, and particularly to saturable-core inductors for alternating current (AC) applications.

### BACKGROUND OF THE INVENTION

Saturable cores have been used in low-frequency applications, especially in dc-link filter chokes in ac drives. In these applications, the frequency of the current does not typically exceed the ripple frequency of the current in the dc-link filter choke, which is about 300 Hz in a 50 Hz power supply, without any significant harmonics above the 300 Hz. There, the saturation characteristics are designed to achieve a "one-size fits all" -design to have the inductance increasing as the nominal current gets smaller. Also, the input current harmonic distortion at partial loads is greatly reduced. Examples of saturable-core dc-link filter chokes are disclosed in US8035470 and US7889040.

Saturable-core inductors are used also in higher-frequency applications in which the frequency of the current can be orders of magnitude higher than the ripple frequency of the current in a dc-link filter choke, such as more than 1 kHz or tens of kHz. One such application is a resonant branch in the Auxiliary Resonant Pole Commutated (ARCP) topology. The ARCP has distinct potential benefits in a motor drive application. The output voltage wave form during commutation can be shaped to be motor friendly via suitable resonant circuit parameter selections. The stress in motor insulation and bearings is thus reduced. The basic configuration and operation of ARCP is described, for example, in the article "The auxiliary resonant commutated pole converter", IEEE-IAS Conference Proceedings 1990, pp. 1228-35, and in US5047913 by R. W. De Doncker et al. The ARCP inverter comprises series-connected dc-link capacitances between the negative (N) and the positive (P) dc-link rails of the dc-link side of the inverter. At a center tap, called a neutral point (NP), of capacitances there is provided a neutral point voltage or potential U_{NP}. Each main switching device of the inverter is provided with an antiparallel diode and associated with a resonant capacitor. Further, an auxiliary circuit comprising a resonant inductor and auxiliary switching device(s) is connected between the neutral point and a phase output. The difference between an ARCP inverter and a hard-switched inverter lies in the commutation between states. In the ARCP commutation is accomplished through the auxiliary circuitry in a finite amount of time. The auxiliary circuit is only used when the output is required to commutate from one voltage rail to the other. In order to ensure that the inverter output voltage at least reaches the positive and negative dc rail voltages during each resonant commutation cycle, a boost current is added to the resonant current by appropriately controlling the conduction times of the auxiliary switching devices and the main switching devices. The amount of boost current is controlled by applying a known voltage to a known resonant inductance for a known boosting time. A predetermined boost current level in the resonator inductor adds sufficient energy to the resonant operation to ensure that the output voltage attempts to overshoot the respective converter antiparallel diode and clamping the output voltage to the respective rail voltage. Ideally, the main switches turn on and off in a zero-voltage condition, and the auxiliary switch(es) in zero-current condition, which reduce the occurring switching losses. Consequently, the switching frequency can be increased without a considerable loss penalty. Low acoustic noise of such a drive is appreciated in many applications. High switching frequency also enables higher fundamental output frequencies with low distortion, making the ARCP topology attractive for high-speed drive applications.

The resonant branch of ARCPI topology is prone to excess voltage oscillation and potential overvoltage across the auxiliary switches, which is mainly due to reverse recovery current of auxiliary diodes and the LC resonance circuit. One solution has been to use a saturable inductor in series with the conventional core or core-less resonant inductor. The saturable inductor is designed to provide high inductance for very low levels of current, but almost zero inductance above the saturation current. The saturable inductor is used to mitigate the problems caused by the reverse recovery current of the auxiliary diodes; the reverse current flows in the inductors, and when the diode "snaps" off the current, the stored energy in the inductors must be discharged. The saturable inductor, with its high inductance at low currents (which is the region when the current polarity in the antiparallel diodes is reversing), greatly reduces the rate of change of the auxiliary diode current, causes a delay for the reverse recovery current "snap" off, and reduces the peak energy stored in the inductors (the peak value of the reverse current is diminished).

A conventional way to implement the saturable core is simply to use a toroid core. Due to the radial symmetry of the shape, the toroid reaches saturation uniformly in the radial dimension. As the current increases, the material in the inner radius saturates first and finally, in full saturation, also the outer ring will be fully saturated. To minimize eddy current losses in the high-frequency applications, either ferrite cores with their high resistance, or amorphous and nanocrystalline wound cores with approximately 20 µm film thickness are usually employed. The hysteresis losses in an application where the core material is run into full saturation at high frequency become a major issue. The total loss is proportional to the volume of the core material that is forced into saturation.

There is a need for a loss reduction and steep saturation characteristics in a saturable magnetic core for applications where the polarity of the current changes at a high frequency. The drop in inductance versus increase in current is desired to be very steep.

### BRIEF DESCRIPTION OF THE INVENTION

An object of the present invention is to provide a saturable-core inductor with lower losses and steeper saturation characteristics for high-frequency applications. The object of the invention is achieved by a saturable-core inductor, use of a saturable-core, and an ARCP converter according to the independent claims. The preferred embodiments of the invention are disclosed in the dependent claims.

An aspect of the invention is a saturable-core inductor, comprising
an inductor wire configured to carry a high-frequency AC current,
a magnetic core structure comprising a non-saturable part and a saturable part,
wherein the non-saturable part of the magnetic core structure comprises at least one core body arranged to form a closed magnetic circuit with at least one air gap,
wherein the saturable part of the magnetic core structure comprises a core bridge element inserted into each of the at least one air gap to form a magnetic bridge across the air gap for the closed magnetic circuit,
wherein each bridge element and the at least one core body are configured to be unsaturated at predetermined low current levels to provide a low-current high inductance, and wherein each bridge element is configured to saturate fully first with increasing current levels and to thereby quickly drop the inductance from the low-current high inductance to a low inductance, while the remaining portions of the at least one air gap are configured to prevent the at least one core body from a full saturation.

In an embodiment, the non-saturable part of the magnetic core structure comprises at least two core bodies assembled to form the closed magnetic circuit with air gaps between opposing ends of the core bodies.

In an embodiment, the magnetic core structure is a toroidal core structure, preferably with two or more core bodies, more preferably with two semi-toroidal core bodies.

In an embodiment, each core bridge element has smaller cross-sectional area than the cross-sectional area of the at least one core body in a plane perpendicular to the magnetic circuit such that the core bridge element saturates fully first and quickly drop the inductance with increasing AC current levels while the at least one core body remains unsaturated and defines the low inductance at increased current levels.

In an embodiment, the magnetic core structure has an outer periphery and an inner periphery defining a central opening, and each bridge element is configured to extend only a portion of the length of the air gap in direction from the inner periphery to the outer periphery of the magnetic core structure.

In an embodiment, each bridge element is inserted within the at least one air gap at the inner periphery of the core structure.

In an embodiment, the core bridge element is arranged to extend across the entire the air gap or only a portion of the air gap in the direction of the magnetic circuit.

In an embodiment, the high frequency is higher than about 1 kHz, preferably higher than about 10 kHz.

In an embodiment, the high frequency is a switching frequency of an electric converter.

Another aspect of the invention is use of the saturable-core inductor according to embodiments as a saturable resonator inductor in an auxiliary circuit branch of an ARCP converter.

A further aspect of the invention is an ARCP converter comprising an auxiliary circuit branch connected between a neutral point and an output node in an ARCP converter, the auxiliary circuit branch comprising a series connection of at least one bidirectional auxiliary switch and a saturable-core inductor according to embodiments of the invention.

In an embodiment, the bidirectional auxiliary switch comprises a pair of switching devices connected back-to-back and provided with anti-parallel diodes.

In an embodiment, the high frequency is a switching frequency of the bi-directional auxiliary switch, and wherein the AC current is an auxiliary current of the auxiliary circuit branch.

### BRIEF DESCRIPTION OF THE DRAWINGS

In the following the invention will be described in greater detail by means of exemplary embodiments with reference to the attached drawings, in which
Figure 1 shows an exemplary core inductor having a toroidal core structure;
Figure 2 shows a flux density plot for a magnetic core structure of Fig. 1;
Figure 3 shows an exemplary inductor having a magnetic core structure according to an embodiment;
Figure 4 shows a flux density plot for a magnetic core structure of Fig. 3;
Figure 5 shows a graph illustrating the change in the inductance in a function of the current in a saturable-core inductor according to an embodiment of the invention;
Figure 6 shows a schematic diagram of an exemplary ARCP inverter;
Figure 7 shows a current waveform illustrating current pulses in a saturable inductor of an ARCP converter;
Figure 8 shows a flux density plot for another magnetic core structure according to an exemplary embodiment, when the core bridge elements are fully saturated; and
Figure 9 a flux density plot for another magnetic core structure according to the other magnetic core structure, when the core bridge elements are unsaturated.

### DETAILED DESCRIPTION OF EXEMPLARY EMBODIMENTS

A core inductor includes a magnetic core and a current carrying inductor wire. The inductor wire may form a coil with two or more turns of the wire wrap around the magnetic core. In the simplest design, a core inductor may include a magnetic core and a current carrying inductor wire passing once through a central opening of the magnetic core.

Exemplary embodiments of the invention will be described using a toroidal or ring core as an example of the shape of the core structure. As used herein, the ring core is essentially identical in shape and performance to the toroid. For example, a magnetic core structure may have a rectangular shape, hollow rod, tube or cylinder shape, a combination of two or more core elements of the same or different cross-sectional shapes, such as two C-elements, two U elements, an I-element in combination with a C-element or a U-element, etc.

Generally, a magnetic core is an object of magnetic material with a high magnetic permeability used to confine and guide magnetic fields in electrical, electromechanical and magnetic devices such as inductors. The magnetic core may be made of ferromagnetic metal such as iron, or ferrimagnetic compounds such as ferrites. The high permeability, relative to the surrounding air, causes the magnetic field lines to be concentrated in the core material. The magnetic field is often created by a current-carrying coil of wire around the core or a current-carrying wire passing through the core. In alternating current (AC) inductors the cores cause energy losses, called core losses, due to hysteresis and eddy currents.

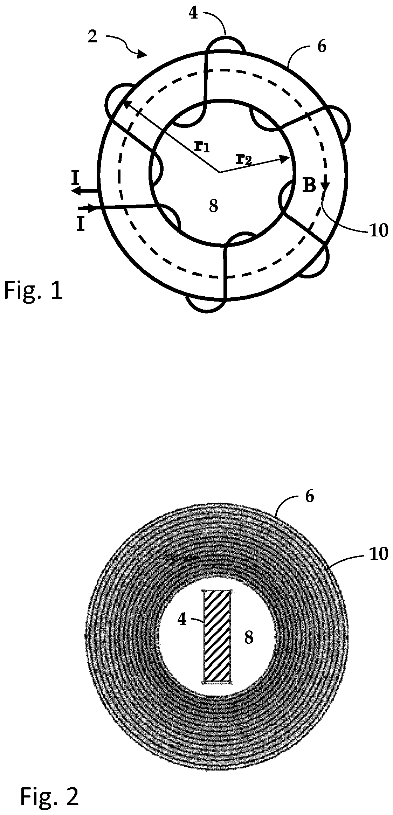

Fig. 1 shows an exemplary core inductor 2 having a toroidal core structure or a ring-shaped core structure 6 with a central opening 8, and an inductor wire 4 passing through the central opening 8 of the core structure 6 and configured to carry an inductor current I. The inductor wire 4 may form a coil with N turns of the wire wound around the magnetic core 6 through the central opening 8, wherein N is a positive integer greater than 0. In the simplest design, the current carrying inductor wire 4 may pass through the central opening 8 of the magnetic core 6 only once. The core structure 6 has an outer periphery having an outer radius r₁, and an inner periphery having an inner radius r₂ and defining the central opening 8. A closed magnetic circuit, i.e., a closed path through which magnetic flux (or magnetic field lines) can flow, is provided inside the core 2, as illustrated by a dashed arrow in Fig. 1. Magnetic flux density B is a measurement of the density of magnetic field lines per a unit area of the core. The magnetic flux density B increases in the magnetic core 2 with an increase of current I. As the current is increased, a point is reached where the magnetic material or core will saturate, i.e., the point beyond which magnetic flux density B in the magnetic core 2 will not increase with an increase of the current I. When the magnetic core saturates, the inductance of the inductor 2 drops towards zero. Due to the radial symmetry of the shape, the toroidal inductor 2 reaches saturation uniformly in the radial dimension. As the current is increased, the material near the inner radius rz saturates first and finally, in full saturation, also the material at the outer radius r₂ will be fully saturated. This is illustrated in the flux density plot shown in Fig. 2 for a magnetic core made of low carbon steel 1010. The inductor wire 4 is a copper conductor passing once through the central opening 8. There, the outer ring is not yet saturated to full extent (slightly lighter shade of grey compared to the shade of grey near the inner radius r₁).

The saturation of the magnetic is not a desired feature in a regular inductor. However, in certain applications, saturable-core inductors may be used whose magnetic core is intentionally driven to saturation under certain conditions.

An aspect of the invention is a saturable-core inductor for high-frequency alternating current (AC) applications, where a high inductance is needed at low current levels and the magnetic core power losses need to be minimized due to high operational frequency. The volume and saturation characteristics of the magnetic core material define the hysteresis losses occurring in operational AC cycles. The higher the unit losses are, the bigger the losses become at high frequencies.

An aspect of the invention is a core structure which has a part that saturates at low flux levels and a part that remains unsaturated. Volume of the saturable part is proportional to hysteresis losses occurring at the high operational frequency. The core structure allows to limit the volume of the saturable core, while keeping the desired inductance vs. current ratio.

The high frequency may be higher than 1 kHz, preferably higher than 10 kHz.

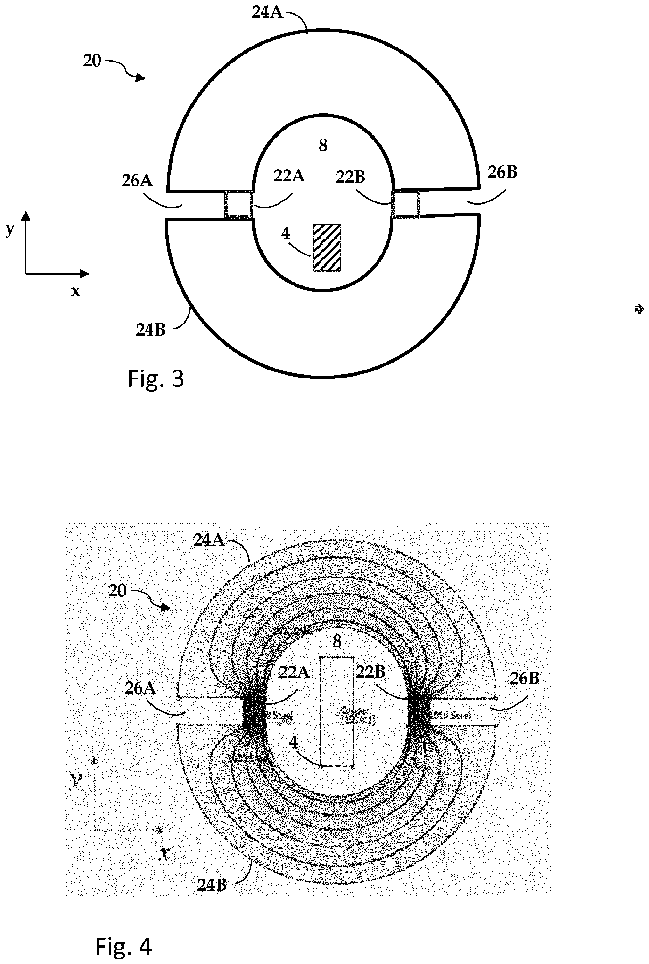

Fig. 3 shows an exemplary inductor 20 having a magnetic core structure according to the aspects of the invention. The exemplary score structure is a toroidal score structure having two core bodies 24A and 24B with air gaps 26A and 26B between their opposing ends. The core bodies 24A and 24B with the air gaps 26A and 26B primarily functions a part of the core structure that remains unsaturated at desired current and flux levels. Further core elements 22A and 22B are inserted into the air gaps 26A and 26B to provide local bridges for the magnetic flux across the air gaps 26A and 26B between the opposing ends of the core bodies 24A and 24B. The core elements 22A and 22B are called core bridge elements herein. The core bridge elements 22A have significantly smaller cross-sectional areas than the cross-sectional areas of the core bodies in a plane perpendicular to the magnetic circuit. The magnetic field lines (the magnetic flux) are choked or throttled to go through this limited area which causes a high flux density in the core bridge elements 22A and 22B already at low current levels, while a low flux density in the core bodies 24A and 24B at the same low current levels. The core bridge elements 22A and 22B also saturate at a low saturation current level at which the core bodies 24A and 24B remain unsaturated. Thus, the core bridge elements 22A and 22B form the part of the core structure which saturates at low current levels and thereby at low flux levels. The volume of the saturable part of the core structure can be limited to a very small amount which results in very small core losses In other words, the core bridge elements 22A and 22B provide a high inductance of the inductor 20, when they are unsaturated. When the core bridge element 22A and 22B are saturated, the inductance of the inductor 20 is defined by the air gaps 26A and 26B and the core bodies 24A and 24B, resulting in an inductance value that is lower than the high inductance. Basically, the saturated core bridge elements 22A and 22B act like air.

Fig. 4 shows an exemplary flux density plot for the magnetic core structure of Fig. 3 where the core bodies 24A and 24B as well as the core bridge elements 22A and 22B are made of low carbon steel 1010, i.e., the same material as used in the example shown in Fig. 2. The flux density plot indicates the level of saturation in different regions of the core. In the example, the outer diameter of the toroidal core structure is about 60 mm, the air gap is about 5 mm, and the width of the bridging pieces is 4 mm. It can be readily seen that, with increasing current, the core bridge elements 22A and 22B have saturated first. Once this has happened, the air gaps 26A and 26B, suitably dimensioned, have prevented the core bodies 24A and 24B from a full saturation. A reduction of the hysteresis losses is evident if one compares the size of the dark areas (saturated high flux density areas) of the two plots shown in Figs. 2 and 4. The conventional core 2 is almost fully dark (saturated) in Fig. 2, whereas only the core bridge elements 22A and 22B are fully saturated in in the inductor 20. It shall be appreciated that the shapes, dimensions, and material selections in these plots are only for illustration purposes.

In the example, the different parts of the magnetic core structure are made of the same core material. Alternatively, the different parts of the magnetic core structure may made of different core materials. Particularly, it may be advantageous to have a core material with a low saturation flux density in the core bridges 22A and 22B, and another core material with a higher saturation flux density in the core bodies 24A and 24B of the core structure.

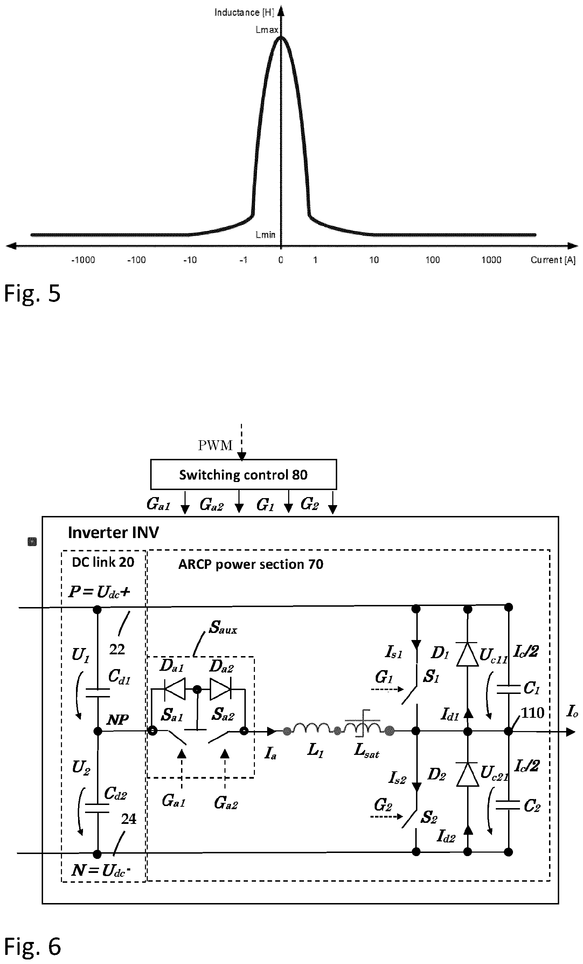

Fig. 5 is an exemplary graph illustrating the change in the inductance in a function of the current I in a saturable-core inductor according to an embodiment of the invention. With low current levels, the small volume of material introduced by the core bridge elements 22A and 22B into the magnetic circuit is an active part of the magnetic circuit and reduces the effective air gap and thereby increases the inductance presented by the inductor. The inductance will have essentially its maximum value Lmax at the zero-crossing point of the high frequency current I. With the increasing current level, the small material volume of the core bridge elements 22A and 22B saturates and increases the effective air gap, and thereby reduces the inductance. The structures and materials of other parts of the magnetic circuit are designed to keep the inductance sufficiently close to a target value Lmin when the core bridge elements are saturated. The behaviour of the inductance in a function of the current is essentially similar for both positive and negative values of the current.

In embodiments, the magnetic core structure may comprise more than two core bodies, more than two air gaps, and a core bridge inserted into each air gap.

As noted above, the core bridges 22A and 22B are dimensioned to have smaller cross-sectional areas than the cross-sectional areas of the core bodies 24A and 24B in the direction of the magnetic circuit (the circumferential direction of the toroid). In embodiments, the core bridge element 22A or 22B may be dimensioned to cover only a portion of the length of the air gap 26A or 26B in direction from one side to an opposite side of the core structure, e.g., in the direction of perpendicular to the plane x-y in in Figs. 3 and 4. In embodiments the dimensioning may be a combination of these. In embodiments, the cross-sectional shape of the core bridge element 22A or 22B may be rectangular, circular, or of another geometrical shape. The size or volume of the bridge element may preferably be essentially less than 50% of the corresponding air gap size or volume, but not limited to this.

The core bridge element 22A or 22B may preferably be inserted into the air gap 26A or 26B at or close to the inner periphery of the magnetic core structure. This may be advantageous particularly in toroidal or ring-shaped magnetic core structures where the core bodies 24A and 24B begin to saturate first from the inner periphery.

In embodiments, the core bridge element 22A or 22B may extend outside the air gap 26A or 26B.

In embodiments, the core bridge element 22A or 22B may be dimensioned to be in contact with the opposing ends of the core bodies 24A and 24A, i.e., to extend across the entire the air gap 26A or 26B, e.g., in the direction of the axis y in Figs. 3 and 4.

In embodiments, the core bridge element 22A or 22B may be dimensioned such that it is not in contact with one or both of the opposing ends of the core bodies 24A and 24A, i.e., there may be a smaller air gap or an intermediate material between the core bridge element and one or both of the opposing ends of the core bodies 24A and 24A, e.g., in the direction of the axis y in Figs. 3 and 4.

In embodiments, two or more core bridge elements may be inserted in each air gap 26A or 26B.

An aspect of the invention is use of a saturable-core inductor according to embodiments of the invention in an auxiliary circuit branch of an ARCP converter.

An aspect of the invention is an auxiliary circuit branch connected between a neutral point and an output node in an ARCP converter, the auxiliary circuit branch comprising a series connection of a bidirectional auxiliary switch, an inductor, and a saturable-core inductor according to embodiments of the invention.

A dc-ac or ac-dc converter, also known as an inverter or a rectifier respectively, converts power from dc to ac or ac to dc power system at desired voltages and frequencies. Further, a dc-dc converter, such as a dc chopper, converts power from dc-to-dc power system. Although embodiments are described using inverters and inverter systems as examples, the invention is similarly applicable to rectifiers and rectifier systems as well as dc-dc converters. Inverter and rectifier can be exactly similar in structure and the control operations can be similar, the difference being the direction of a power flow. When a converter operates as an inverter (dc/ac converter), it converts the power from a dc system to an ac system, i.e., the ac side of the converter is referred as an output side and the dc side is considered as an input side. When a converter operates as a rectifier (ac/dc converter), it converts power from an ac system to a dc system, i.e., the ac side of the converter is considered as an input side and the dc side is considered as an output side. Further, connecting ac/dc and dc/dc converters in back-to-back configuration, i.e., dc-sides connected together, between two ac systems, one of the converters is operating in rectifier mode and the other in inverter mode, depending on the power flow direction. Operation modes of the converters may vary during the operation, as power flow may vary.

It shall be appreciated that the saturable-core inductor according to embodiments of the invention is universally applicable to an auxiliary resonant circuit in any type of ARCP inverters and their derivates and modifications regardless the specific design, configuration, and operation variations of an inverter from a basic ARCP inverter. The basic configuration and operation of ARCP is described, for example, an article "The auxiliary resonant commutated pole converter", IEEE-IAS Conference Proceedings 1990, pp. 1228-35, and in US5047913 by R. W. De Doncker et al. The ARCP inverter can be implemented using various topologies, which all perform essentially similarly. The schematic of an exemplary ARCP inverter INV is illustrated in Figure 6 and described herein in order to alleviate comprehending operation and configuration of embodiments of the invention in relation to an exemplary basic ARCP. It is not intended to limit embodiments of the invention to the described and illustrated exemplary ARCP.

The exemplary ARCP inverter INV illustrated in Fig. 6 may be a bridge inverter including a DC-link 20 and a power section 70. The DC-link may include a DC-link 20 comprising a first dc-link rail 22, a second dc-link rail 24, a first dc-link capacitor C_{d1} coupled with the first dc-link rail 22 and a dc-link midpoint, called a neutral point NP, and a second dc-link capacitor C_{d2} coupled with the second dc-link rail 24 and the neutral point NP. During operation, the first dc-link rail 22 is at a first voltage, so called positive (P) dc-link potential, and the second dc-link rail 24 is at a second voltage lower than the first DC voltage, so called negative (N) dc-link potential, and the dc-link midpoint NP is at a midpoint voltage, so called neutral point voltage U_{NP}. Voltages U₁ and U₂ provided across the dc-link capacitors C_{d1} and C_{d2} series-connected between the dc-link rails 22 and 24. The neutral point voltage or potential U_{NP} may essentially correspond to half of the voltage U_{dc}, in other words U_{NP} = U_{dc}/2.

The exemplary half-bridge power section 70 illustrated in Fig. 6 may include a pair of main or power switching devices S₁ and S₂ coupled in parallel to the dc-link rails 22 and 24 of the dc-link 20. The first main switching device S₁ may have a first terminal electrically coupled to the positive dc-link rail 22 and a second terminal electrically coupled to an output node 110. The second main switching device S₂ may have a first terminal coupled to output node 110 and a second terminal coupled to the negative dc-link rail 24. Across the first main switching device S₁ between the positive dc-link rail 22 and the output node 110 is connected a first antiparallel diode D₁, and across the second main switching device S₂ between the output node 110 and the negative dc-link rail 24 is connected a second antiparallel diode D₂. Further, a first resonant capacitor C₁ is operationally connected (i.e., directly or via additional components, such as an active or passive damping circuit series connected with the resonant capacitor) in parallel with the first main switching device S₁, and a second resonant capacitor C₂ is operationally connected in parallel with the second main switching device S₂. More generally, there may be one or more resonant capacitors connected in such manner that at least one terminal of the resonant capacitor(s) is connected to one of the dc-link rails (P, NP, N) and the other terminal(s) is (are) operationally connected to the phase output node 110. The first main switching device S₁ is operable to turn on and turn off, and thereby to respectively connect and disconnect the dc-link rail 22 and the output node 110, in response to control signal(s) G₁ received from a control and driver circuitry, such as an inverter-specific ARCP switching controller 80 illustrated in Fig. 6. The second main switching device S₂ is operable to turn on and turn off, and thereby to respectively connect and disconnect the dc-link rail 24 and the output node 110, in response to control signal(s) G₂ received from the control and driver circuitry, such as the ARCP switching controller 80.

The exemplary half-bridge power section 70 of the ARCP inverter illustrated in Fig. 6 further includes an auxiliary circuit branch comprising a saturable-core resonant inductor Lₛₐₜ and a bidirectional auxiliary switch Sₐᵤₓ₁ connected in series between the neutral point NP and the output node 110. It shall be appreciated that the resonant inductor and auxiliary switch may be located in any order in an ARCP circuit without having effect on the invention. The auxiliary switch Sₐᵤₓ₁ is operable to turn on and turn off, and thereby to respectively connect and disconnect the neutral point and the output node 110, in response to control signals received from the control and driver circuitry, such as the ARCP switching controller 80. The auxiliary switch Sₐᵤₓ₁ can behave like a bidirectional thyristor: it can be triggered into conduction, and it turns off if or before the current tries to reverse its direction. In embodiments, the bidirectional auxiliary switch Sₐᵤₓ₁ may be implemented with a pair of ordinary switching devices connected back-to-back, for example in a common-emitter or common-collector configuration and provided with anti-parallel diodes. Figure 6 illustrates an exemplary auxiliary switch Sₐᵤₓ₁ comprising a first auxiliary switching device Sₐ₁ and a second auxiliary switching device Sa₂ in a common-emitter series connection, a first anti-parallel diode Dₐ₁ connected across the first auxiliary switching device Sₐ₁, and a second antiparallel diode Daz connected across the second auxiliary switching device Sₐ₂. To initiate a new output commutation, one of the two auxiliary switching devices Sₐ₁ and Sₐ₂ is turned on and conducting at a time, in response to control signals Gₐ₁ and Gₐ₂ received from a control and driver circuitry, such as an ARCP switching controller 80 illustrated in Fig. 6. Depending on the main switching devices S₁ and S₂ conducting states, one of the two antiparallel diodes Dₐ₁ and Dₐ₂ may be forward biased and thus start conducting current. In this case, the auxiliary current Iₐ will flow through one forward biased diode in series with one switch. The auxiliary switching devices in the auxiliary circuit are preferably turned on and off at zero-current. When the first auxiliary switching device Sₐ₁ is turned on and the second switching device Sₐ₂ is turned off, the auxiliary current Iₐ₁ will flow in one direction through Sₐ₁ and Dₐ₂. When the first auxiliary switching device Sₐ₁ is turned off and the second switching device Sₐ₂ is turned on, the auxiliary current Iₐ will flow in the opposite direction through Sₐ₂ and Dₐ₁. The auxiliary circuit branch is only used when the output node 110 is required to commutate from one voltage rail to the other. The auxiliary circuit functions by creating a pulse of current that, in combination with the resonant capacitors, is used to slew the output voltage on the output node 110.

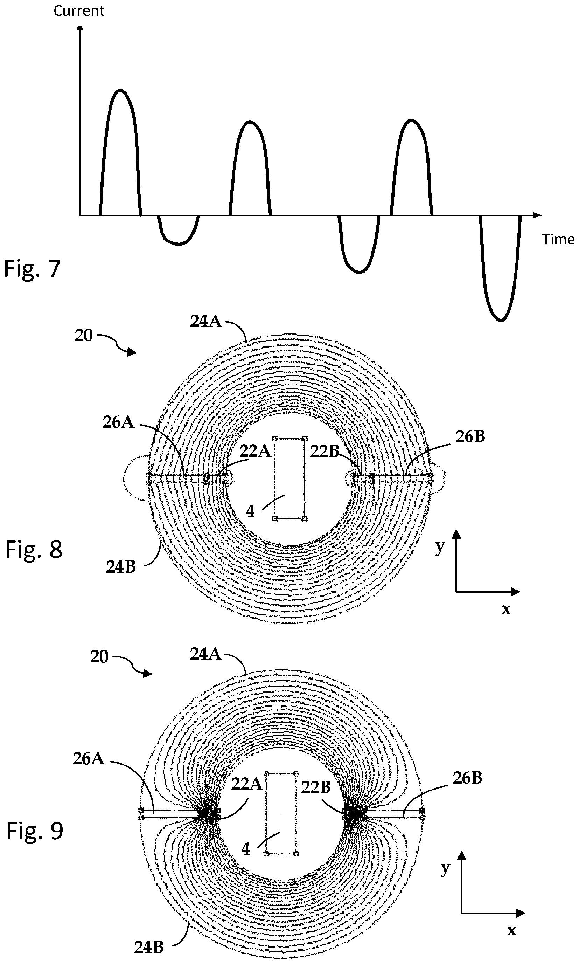

The saturable core resonant inductor Lₛₐₜ is used to mitigate the problems caused by the reverse recovery current of the diodes Dₐ₁ and Dₐ₂; the reverse current flows in the saturable core resonant inductor Lₛₐₜ, and when the diode "snaps" off the current, the stored energy in the saturable core resonant inductor Lₛₐₜ must be discharged. The saturable core resonant inductor Lₛₐₜ, with its high inductance at low currents (which is the region when the current polarity in the diodes Dₐ₁ or Dₐ₂ is reversing), greatly reduces the rate of change of the auxiliary current dIₐ/dt, causes a delay for the reverse recovery current "snap" off, and also reduces the peak energy stored in the inductors L₁ and Lₛₐₜ (the peak value of the reverse current is diminished). In an ARCP converter, current pulses in the saturable core resonant inductor Lₛₐₜ can be of different sizes and in different directions, as illustrated schematically in Fig. 7. The interval between the current pulses may typically be 1 µs .... 1000 µs. The current of the saturable core resonant inductor Lₛₐₜ is substantially about zero, although nonidealities of circuit components may cause a small leakage current through the inductor also between the pulses. The waveform of the inductor current pulses may have linearly and sinusoidally changing portions. Typically, the succeeding inductor current pulses are in opposite directions but in special circumstances they may also be in same direction.

The switching frequency of the ARCP topology can reach tens of kHz. The hysteresis losses become a major issue when the core material is run into a full saturation at a high frequency. Use of a saturable-core inductor according to embodiments of the invention as a saturable core resonant inductor Lsat in the ARCP topology results in a substantial reduction in the core losses. The saturable core resonant inductor Lₛₐₜ preferably comprises comprising a non-saturable core part and a saturable core and thereby have a high inductance value at low current levels and a lower inductance at higher (normal) current levels in accordance with embodiments of the invention. In some applications, there may be a further non-saturable resonant inductor L₁ in series with the saturable core resonant inductor Lₛₐₜ, as illustrated in Fig. 6.

Example. A toroidal core structure was provided with an outer diameter 58 mm (r₁ = 29 mm), an inner diameter 26 mm (r₂ = 13 mm), and an axial length 13 mm (in a direction perpendicular to the x-y plane). The size of the air gap is 1.5 mm. The material of the core bodies was METGLAS and the material of the core bridge elements was FeNiZnV (ferrite). The dimensions of the core bridge elements were: width 4 mm (x-axis), height 1.5 mm (y-axis), and length 13 mm (a direction perpendicular to the x-y plane). Fig. 8 shows an exemplary flux density plot for the provided magnetic core structure when the core bridge elements are fully saturated. The field lines extend accross the air gaps. The inductor current is 1600 A and the saturated inductance is 115 nH. Fig. 9 shows an exemplary flux density plot for the provided magnetic core structure when the core bridge elements are not saturated. The field lines extend through the core bridge elements. The inductor current is 1 A and the unsaturated inductance is 8.3 µH. .

The description and the related drawings are only intended to illustrate the principles of the present invention by means of examples. Various alternative embodiments, variations and changes are obvious to a person skilled in the art on the basis of this description. The present invention is not intended to be limited to the examples described herein but the invention may vary within the scope and spirit of the appended claims.

## Claims

1. A saturable-core inductor, comprising
an inductor wire configured to carry a high-frequency AC current,
a magnetic core structure comprising a non-saturable part and a saturable part,
wherein the non-saturable part of the magnetic core structure comprises at least one core body arranged to form a closed magnetic circuit with at least one air gap,
wherein the saturable part of the magnetic core structure comprises a core bridge element inserted into each of the at least one air gap to form a magnetic bridge across the air gap for the closed magnetic circuit,
wherein each bridge element and the at least one core body are configured to be unsaturated at predetermined low current levels to provide a low-current high inductance, and wherein each bridge element is configured to saturate fully first with increasing current levels and to thereby quickly drop the inductance from the low-current high inductance to a low inductance, while the remaining portions of the at least one air gap are configured to prevent the at least one core body from a full saturation.

2. The inductor as claimed in claim 1, wherein the non-saturable part of the magnetic core structure comprises at least two core bodies assembled to form the closed magnetic circuit with air gaps between opposing ends of the core bodies.

3. The inductor as claimed in any one of preceding claims, wherein the magnetic core structure is a toroidal core structure, preferably with two or more core bodies, more preferably with two semi-toroidal core bodies.

4. The inductor as claimed in any preceding claim, wherein each core bridge element has smaller cross-sectional area than the cross-sectional area of the at least one core body in a plane perpendicular to the magnetic circuit such that the core bridge element saturates fully first and quickly drop the inductance with increasing AC current levels while the at least one core body remains unsaturated and defines the low inductance at increased current levels.

5. The inductor as claimed in any preceding claim, wherein the magnetic core structure has an outer periphery and an inner periphery defining a central opening, and each bridge element is configured to extend only a portion of the length of the air gap in direction from the inner periphery to the outer periphery of the magnetic core structure.

6. The inductor as claimed in claim 5, wherein each bridge element is inserted within the at least one air gap at the inner periphery of the core structure.

7. The inductor as claimed in any one of preceding claims, wherein the core bridge element is arranged to extend across the entire the air gap or only a portion of the air gap in the direction of the magnetic circuit.

8. The inductor as claimed in any preceding claim, wherein the high frequency is higher than about 1 kHz, preferably higher than about 10 kHz.

9. The inductor as claimed in any preceding claim, wherein the high frequency is a switching frequency of an electric converter.

10. Use of the inductor as claimed in any one of claims 1-9 as a saturable inductor in an auxiliary circuit branch of an ARCP converter.

11. An ARCP converter comprising an auxiliary circuit branch connected between a neutral point and an output node in an ARCP converter, the auxiliary circuit branch comprising a series connection of at least one bidirectional auxiliary switch and a saturable-core inductor according any one of claims 1-9.

12. The ARCP converter as claimed in claim 11, wherein the bidirectional auxiliary switch comprises a pair of switching devices connected back-to-back and provided with anti-parallel diodes.

13. The ARCP converter as claimed in claim 11 or 12, wherein the high frequency is a switching frequency of the bi-directional auxiliary switch, and wherein the AC current is an auxiliary current of the auxiliary circuit branch.
